# FASCICULE DE BREVET EUROPEEN

(11) **EP 3 297 444 B1**
(45) Date de publication et mention de la délivrance du brevet: **29.01.2020**
(21) Numéro de dépôt: 16729028.7
(22) Date de dépôt: 17.05.2016
(51) Int. Cl.: A21C 5/00, A21C 7/06, A21C 11/00, A21C 11/10

(54) **PROCEDE ET DISPOSITIF DE FACONNAGE POUR BAGUETTES, PAINS LONGS ET PETITS PAINS ALLONGES**
VERFAHREN UND VORRICHTUNG ZUR FORMUNG VON BAGUETTES, LANGEN LAIBEN UND LÄNGLICHEN BRÖTCHEN
METHOD AND DEVICE FOR SHAPING BAGUETTES, LONG LOAVES AND ELONGATE ROLLS

(30) Priorité: 18.05.2015 FR 1554422
(43) Date de publication de la demande: 28.03.2018
(73) Titulaire: Kaak Groep B.V., 7061 GA Terborg (NL)
(72) Inventeur: ZORN, Bernard, 67700 Saverne (FR)
(74) Mandataire: Peters, Sebastian Martinus
(86) Numéro de dépôt international: PCT/FR2016/051160
(87) Numéro de publication internationale: WO 2016/185131

(56) Documents cités:
- EP-A2- 1 579 765
- GB-A- 2 192 360

## Description

La présente invention concerne les unités de production de produits de boulangerie, viennoiseries et similaires et a trait, particulièrement, aux unités de traitement de la pâte en sortie de pétrissage pour la fabrication de baguettes, pains longs, petits pains allongés.

Plus particulièrement, l'invention concerne un procédé et un dispositif de façonnage de la pâte pour la fabrication de produits de boulangerie.

Il existe à l'heure actuelle essentiellement deux techniques de façonnage pour, en sortie de pétrissage, produire des baguettes, pains longs, petits pains allongés ou similaires. La première consiste à alimenter, en sortie de pétrin et au travers d'une trémie, un dispositif de division de pâte, lequel délivre sur un tapis de transport adapté des boules de pâte. Celles-ci sont, progressivement, acheminées en direction d'un dispositif de façonnage consistant à allonger, transversalement à la progression du tapis de transport, ces boules de pâte pour former un boudin correspondant sensiblement à la longueur de la baguette à produire, sachant que ce boudin de pâte peut encore être subdivisé en deux ou davantage de tronçons pour la fabrication de pains longs, petits pains allongés, etc.

La seconde solution consiste à alimenter en pâte en sortie du pétrin une unité de laminage qui, dans sa partie avale, vient délivrer sur un tapis de transport adapté, une bande de pâte d'épaisseur constante et de largeur adaptée à celle dudit tapis de transport.

Cette bande de pâte est ensuite découpée transversalement par guillotinage en bandelettes de largeur régulière, lesquelles sont ensuite écartées les unes des autres pour, là encore, subir une opération de façonnage consistant, essentiellement, en une mise en forme, éventuellement après une opération de subdivision en deux ou davantage de tronçons, selon la longueur de la baguette, du pain long ou des petits pains allongés que l'on souhaite obtenir.

Dans le cadre de la première solution, l'opération de façonnage des pâtons consiste en des opérations d'allongement et de mise en forme de la pâte pour obtenir, partant d'un pâton sensiblement en forme d'une boule, un boudin allongé. Ce travail de la pâte a pour conséquence d'influencer directement sa structure qui déterminera les caractéristiques de la mie de pain (serrée ou alvéolaire) après cuisson, mais aussi celle de la croûte : fine ou épaisse, dure, cassante ou souple.

Par exemple, une boule de pâte découpée et non façonnée donne, après cuisson, un produit ferme, à croûte plutôt épaisse, souvent avec une mie très aérée. Contrairement, cette même boule de pâte façonnée, outre la forme cylindrique, va conduire, après cuisson, à un pain dont la croûte est fine et dont la mie est plus ou moins alvéolée, selon l'intensité des mouvements de façonnage imposée au pâton.

A ce propos, il faut rappeler qu'il est usuel, pour favoriser l'expansion du pain en cours de cuisson, d'inciser, de manière régulière et au moyen de lames appropriées, la surface de la pâte. Ces incisions ou « coups de lame » sont d'apparences distinctes en surface du pain cuit, selon que la pâte a plus ou moins été pétrie au travers des opérations de façonnage. Ainsi, une pâte peu pétrie donnera à ces coups de lame une apparence plutôt effacée après cuisson. Inversement, selon l'intensité des mouvements de façonnage imposés à un pâton pour lui donner la forme allongée d'une baguette, ces coups de lame apparaissent de manière très franche en surface du pain après cuisson, avec des bords de découpe, dites « crêtes », dressés, résultant, précisément, de la prise de force de la pâte pendant le façonnage.

De même, un façonnage excessif consistant à imprimer au pâton une forte et longue action mécanique, donne au pain après cuisson une mie serrée et un volume réduit.

En conclusion, dans la première solution évoquée plus haut, où l'opération de façonnage consiste à transformer des boules de pâte en boudins allongés pour la fabrication de baguettes, pains longs ou petits pains allongés, conduit, nécessairement, à imprimer une action mécanique de façonnage importante sur la pâte.

Contrairement, dans le cadre de la seconde solution, les bandelettes de pâte découpées depuis une bande de pâte laminée, peuvent avoir, d'office, les dimensions de la baguette ou du pain long à fabriquer. Tout au plus ces bandelettes peuvent subir des opérations de redécoupe en longueur pour la fabrication de petits pains allongés. Toutefois, les opérations de découpe en bandelettes de la bande de pâte ont pour inconvénient de ne pas refermer la pâte sur ses côtés de découpe et aux extrémités. Or, on sait que pour favoriser le développement périphérique d'une croûte de pâte plus ou moins uniforme lors de la cuisson du pain, il était nécessaire, au niveau de ces bords de découpe, que la couche de pâte de surface vienne se refermer sur la couche de pâte inférieure. En effet, la couche de pâte supérieure et la couche de pâte inférieure, en raison des actions mécaniques qu'elles ont nécessairement subies au cours de l'opération de laminage de la bande, ont acquis une force qui va conduire à une cuisson différente par rapport aux côtés découpés des bandelettes de pâte. En conséquence, cette seconde solution impose également un façonnage de ces bandelettes de pâte. Cependant, l'action mécanique exercée dans ce cas sur la pâte est beaucoup plus réduite.

Dans chacune de ces deux solutions évoquées ci-dessus, le façonnage s'effectue dans la continuité du déplacement de la bande de transport sur lesquels reposent les pâtons à façonner ou les bandelettes de pâte découpée. Les produits sont donc façonnés successivement les uns derrière les autres. Tout au plus, une bandelette de pâte ou un boudin de pâte peut être découpée en deux ou davantage de tronçons qui sont susceptibles d'être façonnés simultanément.

Par ailleurs, on connait par le document EP 1 579 765, un procédé et un dispositif pour façonner différemment des morceaux de pâte délivré en rangée transversales sur une bande de transport en aval d'une unité de laminage et découpe d'une bande de pâte. Plus particulièrement, selon le procédé décrit dans ce document antérieure, il s'agit également de découper une bande de pâte dans le sens longitudinal en vue de définir des bandelettes de pâte que l'on vient écarter transversalement les unes par rapport aux autres. Ces bandelettes sont ensuite découpées en morceaux de pâte s'étendant en rangées transversales au-dessus d'une bande de transport.

Certains de ces morceaux de pâte d'une rangée transversale ne subissent aucun façonnage, d'autres sont soumis à une opération de façonnage en boule, tandis que d'autres encore sont façonnés en rouleaux de pâte venant s'étendre transversalement, c'est-à-dire perpendiculairement par rapport à l'axe de progression de la bande de transport.

Les moyens mis en œuvre pour façonner ces morceaux de pâte, selon le cas en boule ou en forme de rouleau, sont distincts. Dans la mesure où le façonnage en boule ne peut se faire sous l'effet de la progression de la bande de de transport sur laquelle repose les morceaux de pâte, le dispositif de façonnage en boule est soumis à un déplacement cyclique au cours duquel :
- il est abaissé sur la bande de transport et accompagne celle-ci dans sa progression, tout en conformant les morceaux de pâte en boule ;
- puis il est relevé et se déplace en sens inverse à la direction de déplacement de la dite bande, afin de regagner sa position initiale pour un nouveau cycle.

Une autre solution est souvent mise en œuvre pour la découpe et le façonnage d'une bande de pâte laminée en vue de la fabrication de baguettes, pains longs ou petits pains allongés. Tout particulièrement, la bande de pâte laminée subit des découpes, non pas transversales, mais longitudinales en bandelettes de pâte que l'on vient écarter transversalement pour les individualiser. Ces bandelettes longitudinales sont ensuite découpées en longueur par une découpe transversale pour définir des tronçons de bandelettes de pâte disposées en rangées transversales et de longueur adaptée aux baguettes, pains longs, ou petits pains allongés à fabriquer. Ces tronçons sont, alors, successivement repris par un dispositif de façonnage s'étendant perpendiculairement sur l'un ou l'autre des côtés latéraux de ladite bande de transport.

En sommes, les tronçons de bandelette de pâte sont repris par un dispositif de façonnage latéral en les acheminant dans une direction perpendiculaire à la bande de transport sur laquelle ils reposaient préalablement. Cela impose, en particulier, la dépose de ces tronçons depuis la bande de transport initiale sur celle du dispositif de façonnage, dépose qui, comme cela apparaitra plus en détail dans la description ci-dessous, est souvent délicate à mener en raison du caractère collant de la pâte. D'ailleurs cette dépose constitue une réelle limite aux cadences de production.

Finalement, dans chacune des solutions exposées ci-dessus, la cadence de production de ce type de produits de boulangerie que sont les baguettes, les pains longs ou les petits pains allongés, dépend de la capacité des dispositifs de façonnage à façonner successivement et les uns derrière les autres, les tronçons de bandelette de pâte prédécoupés. Tout au plus, selon la largeur de la bande de transport ne un tel dispositif de façonnage peut traiter simultanément plusieurs petits tronçons alignés transversalement au-dessus de cette bande de transport pour la fabrication de petits pains allongés. Dans tous les cas, la largeur de cette bande de transport est habituellement telle qu'il ne peut être traité qu'un seul tronçon, voire tout au plus deux tronçons de bandelette de pâte disposés de manière alignée transversalement pour la fabrication de baguettes.

Comme déjà évoqué succinctement plus haut, cette disposition, après façonnage, des tronçons de bandelette de pâte transversalement par rapport à la direction de progression de la bande de transport sur laquelle ils reposent, pose le problème de leur transfert, en aval de cette bande de transport, sur, selon le cas, une autre bande de transport ou sur des plaques alvéolées pour leur acheminement, par exemple, au travers d'une unité de fermentation.

En effet, en arrivant sur le rouleau de renvoi en aval de cette bande de transport, ces tronçons de bandelette de pâte ne sont que rarement disposés de manière strictement rectiligne transversalement au-dessus de cette dernière. Lorsque, pour la fabrication de petits pains allongés, plusieurs tronçons de pâte transversalement alignés au-dessus de la bande de transport ont été façonnés simultanément en amont, ils se présentent souvent de manière décalée en arrivant sur ce rouleau de renvoi en aval. Il est donc nécessaire pour assurer, à chaque transfert, le réalignement ces tronçons de pâte décalés et/ou pour garantir une disposition sensiblement rectiligne de ces tronçons de pâte sur la bande ou la plaque de transport en aval, que celle-ci respecte un temps d'arrêt suffisant, de l'ordre d'au moins une seconde.

Cette contrainte constitue un goulot d'étranglement et limite de manière drastique les cadences de production. Ainsi, une unité de production de baguettes mettant en œuvre un procédé de façonnage selon les solutions de l'état de la technique, n'est guère capable de dépasser une cadence de production de l'ordre de 3000-3600 baguettes à l'heure.

La présente invention se veut à même de répondre à l'ensemble des inconvénients des solutions présentées plus haut au travers d'un procédé et d'un dispositif de façonnage capable de façonner très rapidement et simplement, toute une rangée transversale, de tronçons de bandelettes de pâte s'étendant longitudinalement au-dessus de la bande de transport. Surtout, ce façonnage peut être mené sans solliciter plus que nécessaire la pâte.

De manière essentielle, le procédé et le dispositif selon l'invention évitent le façonnage des tronçons de bandelette de pâte les uns après les autres. De plus, ce procédé et ce dispositif permettent, en aval, après façonnage de ces tronçons de bandelette de pâte, de les déposer dans leur prolongement longitudinal. Il n'y a donc pas de temps d'attente nécessaire à respecter au niveau de la bande ou de la plaque de transport en aval sur lesquels ces tronçons de pâte façonnés sont à déposer. Bien au contraire, cette bande ou cette plaque de transport recueillant ces tronçons de pâte façonnés doit progresser à une vitesse d'avance identique à celle de la bande de transport amont sur laquelle intervient l'opération de façonnage.

En étant en mesure de s'affranchir de ce qui constituait un goulot d'étranglement et donc une limitation de la cadence de production, mais aussi en étant à même de façonner simultanément un grand nombre de tronçons de bandelette de pâte disposés longitudinalement en rangées transversales sur la bande de transport, la solution selon l'invention permet d'atteindre, sur une même ligne de production et avec une seule façonneuse des cadences qui peuvent être 4 à 5 fois supérieur aux cadences de productions actuelles.

A cet effet, l'invention concerne un procédé de façonnage de pâte pour la fabrication de baguettes, pains longs, petits pains allongés ou similaires consistant, partant d'une bande de pâte laminée se déployant au-dessus d'une bande de transport :
- à découper dans le sens longitudinal cette bande de pâte laminée en plusieurs bandelettes ;
- à écarter transversalement ces bandelettes les unes par rapport aux autres ;
- à découper les bandelettes à longueur au travers d'une découpe transversale pour la définition de tronçons de bandelettes de pâte s'étendant longitudinalement au-dessus de ladite bande de transport, en rangées transversales, sensiblement perpendiculaires à l'axe longitudinale de cette bande de transport.
procédé caractérisé par le fait que :
- on réalise le façonnage d'au moins une rangée transversale de tronçons de bandelettes de pâte longitudinale, sous l'impulsion d'un déplacement alternatif rectiligne transversal d'un plateau de façonnage s'étendant perpendiculairement à ladite bande de transport, au-dessus de la ou des rangées transversales de tronçons de bandelettes de pâte à façonner.

De manière avantageuse, le procédé consiste à :
- acheminer la ou les rangées transversales de tronçons de bandelettes de pâte à façonner sous ledit plateau de façonnage maintenus au-dessus de la bande de transport à une distance supérieure à l'épaisseur desdits tronçons de bandelettes de pâte;
- à abaisser le plateau de façonnage sur la ou lesdites rangées ;
- à soumettre le plateau de façonnage à un mouvement alternatif suivant une direction perpendiculaire à la bande de transport sur laquelle repose la ou lesdites rangées ;
- à immobiliser et à surélever ledit plateau de façonnage au-delà d'une durée de façonnage et/ou d'un nombre déterminé de cycle de translations alternatives ;
- à évacuer la ou les rangées de tronçons de bandelettes de pâte façonnés.

L'invention concerne encore un dispositif de façonnage selon la revendication 3.

Les avantages résultant de la présente invention sont, indéniablement, un gain dans la qualité des produits obtenus au travers d'un façonnage parfaitement contrôlable, mais aussi un gain substantiel en cadence de production en comparaison aux solutions antérieurement connues.

La présente invention sera mieux comprise à la lecture de la description qui va suivre se rapportant aux dessins joints en annexes dans lesquels :
- La figure 1 est une illustration schématisée vue de dessus et partielle d'une unité de production de produits de boulangeries, tels que des baguettes, pains longs et/ou petits pains allongés, mettant en œuvre un dispositif de façonnage selon l'invention ;
- La figure 2 est une représentation schématisée et en élévation de ce dispositif de façonnage ;
- La figure 3 est une vue schématisée et de dessus de la figure 2 ;
- La figure 4 est une vue schématisée et en coupe d'un exemple de réalisation d'un plateau de façonnage ;
- Les figures 5, 6, 7 et 8 illustrent, de manière schématisée, les différentes opérations d'un cycle de façonnage de deux rangées transversales de tronçons de pâte ;
- La figure 9 illustre de manière schématisée et en élévation un autre mode de réalisation du plateau de façonnage.

Telle que représentée dans les figures du dessin ci-joint, la présente invention concerne l'opération de façonnage dans un cycle de production de produits de boulangerie, de type baguettes, pains longs, petits pains allongés ou similaires.

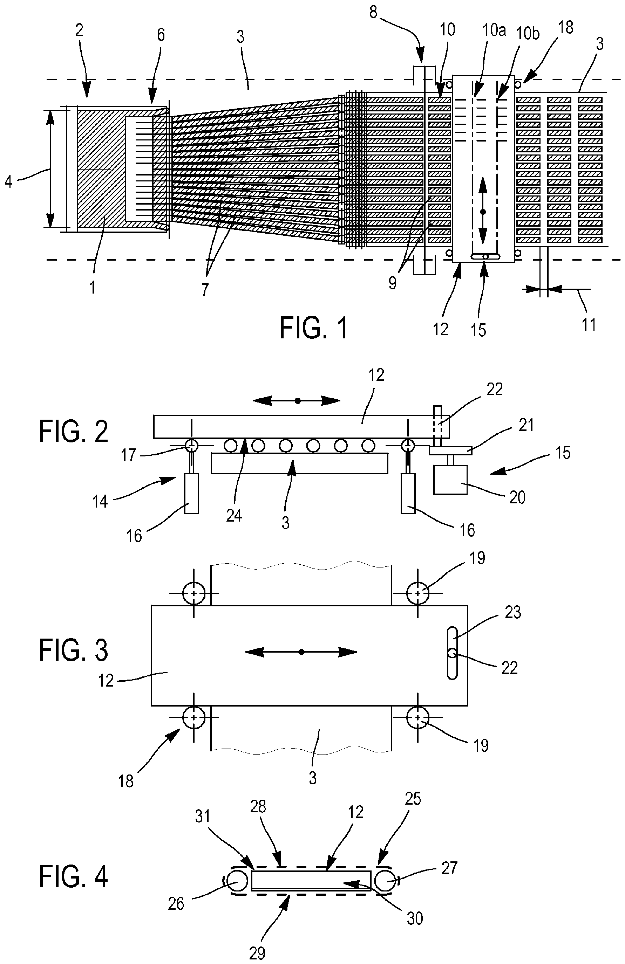

Ainsi, comme plus particulièrement visible dans la figure 1, il est fréquent de produire des baguettes, pains longs, petits pains allongés, partant d'une bande de pâte laminée 1 que délivre une unité de laminage 2 disposée en amont sur une bande de transport 3 se déplaçant longitudinalement.

Concernant cette bande de transport 3, il convient d'observer qu'elle peut se présenter sous forme de plusieurs tronçons de bandes de transport disposées les unes dernière les autres, dont certaines sont en progression continue d'autres en progression discontinue, ceci selon les étapes du procédé de façonnage selon l'invention. Aussi, par la désignation de bande de transport 3, il peut être entendu, selon le cas, celle-ci dans son intégralité ou un tronçon de cette dernière.

A noter qu'en sortie de laminage 2, la bande de pâte laminée 1 présente une certaine largeur 4, mais aussi une épaisseur plus particulièrement déterminée par rapport aux produits que l'on souhaite concevoir en aval.

Au travers d'une unité de découpe longitudinale 6, cette bande de pâte laminée 1 est découpée en bandelettes longitudinales 7 qui, par des moyens adaptés, connus par l'homme du métier, sont progressivement écartées transversalement les unes par rapport aux autres sur la bande de transport 3.

Puis, une unité de découpe transversale 8 découpe, par guillotinage, ces bandelettes 7 en tronçons 9 dont la longueur dépend du type de produits, baguettes, pains longs, petits pains allongés que l'on souhaite fabriquer.

En aval de l'unité de découpe transversale 8 s'étendent, perpendiculairement au-dessus de la bande de transport 8, des rangées 10, 10a, 10b de tronçons 9 de bandelettes de pâte. Ces rangées 10, 10a, 10b, dénommées rangées transversales dans la suite de la description pour en améliorer la compréhension, sont elles-mêmes espacées les unes par rapport aux autres d'une distance 11 déterminée.

Cet espacement est par exemple obtenu au travers d'une progression en discontinue du tronçon de la bande de transport 3 sur laquelle sont disposés les rangées 10, 10a, 10b de tronçons 9 de bandelettes de pâte en vue de leur façonnage, ceci en comparaison au tronçon de la bande de transport en fonctionnement continu en amont au-dessus de laquelle interviennent les opérations de laminage et de découpe.

Selon le procédé conforme à l'invention, on procède au façonnage simultané de l'ensemble des tronçons de pâte 9 d'au moins une rangée 10, 10a, 10b sous l'impulsion d'un mouvement de translation alternatif d'un plateau de façonnage 12 s'étendant perpendiculairement par rapport à la bande de transport 3, au-dessus de cette ou ces rangées 10, 10a, 10b de tronçons de pâte 9.

A noter d'ailleurs, que ce plateau de façonnage s'étend, préférentiellement, de manière strictement perpendiculairement par rapport à la bande de transport 3.

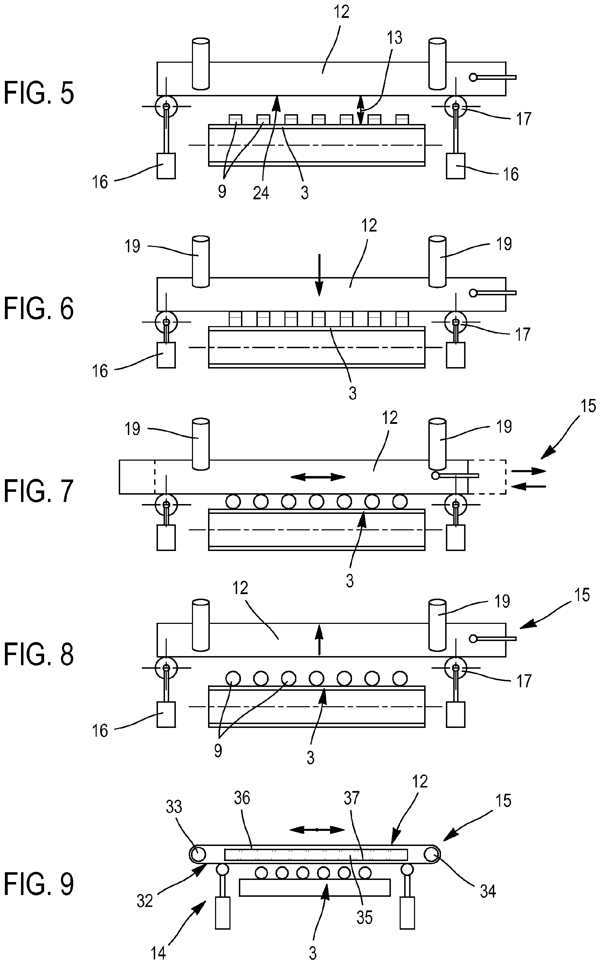

En somme et comme visible dans les figures 1 à 8, en aval de l'unité de découpe transversale 8, les rangées transversales 10, 10a, 10b de tronçons de pâte 9 sont acheminées, soit individuellement, soit par deux, trois ou davantage, sous ledit plateau de façonnage 12. Celui-ci s'étend, à ce moment-là, à une distance 13 supérieure à l'épaisseur des tronçons de pâte 9, sensiblement perpendiculairement au-dessus de la bande de transport 3 (voir figure 5).

Au cours du cycle suivant, correspondant à la figure 6, le plateau de façonnage 12 est abaissé, grâce à des moyens de commande de montée et descente 14 appropriés, pour venir s'appuyer sur cette ou ces rangées 10a, 10b de tronçons de pâte 9.

Par des moyens d'entraînement 15, ledit plateau de façonnage 12 est ensuite soumis à un mouvement de translation rectiligne alternatif transversalement au-dessus de la bande de transport 3 pour façonner lesdits tronçons de pâte 9 (voir figure 6 et 7). En somme ce plateau 12 se déplace dans un mouvement alternatif exclusivement perpendiculairement à la direction de déplacement de la bande de transport 3, qui correspond également à la direction longitudinale d'acheminement des tronçons de pâte 9.

A noter que dans la mesure où, lors cette opération de façonnage, ces tronçons 9 de pâte sont amenés à rouler transversalement sur la bande de transport 3, celle-ci est définie de largeur supérieure à celle d'une rangée 10, 10a, 10b, ceci d'une longueur correspondant à cette amplitude du déplacement transversal conférée auxdits tronçons de pâte 9.

Après façonnage qui peut correspondre à une durée ou un nombre de cycle de mouvement alternatif conféré au plateau de façonnage 12, celui-ci est relevé, comme illustré dans la figure 8, par lesdits moyens 14 et un nouveau cycle de façonnage peut recommencer après évacuation de la ou des rangées 10a, 10b de tronçons de pâte 9 façonnés de dessous dudit plateau de façonnage 12 et l'acheminement sous ce dernier de la ou des rangées suivantes.

En conséquence, l'intensité du façonnage imprimé aux tronçons de pâte 9 dépend essentiellement du nombre de cycles de translation alternatif conféré au plateau de façonnage 12 et de la pression exercée par ce dernier sur ces tronçons de pâte 9.

S'il a d'ores et déjà été évoquée, plus haut, la gestion, soit par mesure du temps, soit par comptage du cycle des déplacements alternatifs imprimés au plateau de façonnage 12, la mesure de la pression exercée par ce dernier sur les tronçons de pâte 9 peut être menée par des moyens de détection de pression, tels que connus par l'homme du métier, ou par détermination de la distance entre le plateau de façonnage 12 et la bande de transport 3.

Selon un mode de réalisation avantageux, les moyens de commande de montée et de descente 14 sont constitués par des vérins 16 sur lesquels vient reposer le plateau de façonnage 12 par l'intermédiaire de galets 17, favorisant le déplacement transversal de ce plateau de façonnage 12.

De manière complémentaire, des moyens de guidage 18, préférentiellement mais non nécessairement, sous forme de rouleaux ou galets 19 assurent le guidage, dans cette direction perpendiculaire par rapport à la bande de transport 3 du plateau de façonnage 12 au-dessus de cette dernière.

La figure 2 illustre, de manière schématisée, un exemple de réalisation des moyens d'entraînement 15.

Ainsi, ces derniers peuvent se présenter sous forme d'un moteur d'entraînement 20 soumettant en rotation, au moyen d'un plateau ou d'une bielle d'entraînement 21, une tige excentrique 22 en prise avec le plateau de façonnage 12. Plus particulièrement, celui-ci peut être pourvu d'une fente longitudinale 23, c'est-à-dire s'étendant parallèlement à la direction de déplacement de la bande de transport 3, pour autant ajustée transversalement à la section de la tige excentrique 22. Ainsi, sous l'effet de la rotation de cette dernière, celle-ci se déplace alternativement, dans la fente longitudinale 23, tout en déplaçant alternativement dans le sens transversal le plateau de façonnage 12, c'est-à-dire dans une direction exclusivement perpendiculaire à la direction de déplacement de la bande de transport 3.

L'avantage de tels moyens d'entraînement 15 de conception simplifiée est la longévité. Il en va de même en ce qui concerne les moyens de commande de montée et descente 14 du plateau de façonnage 12 ou encore les moyens 18 contribuant à son guidage transversal au-dessus de la bande de transport 3.

Si le plateau de façonnage 12 peut être traité anti adhérent, au niveau de sa face 24 au contact des tronçons de pâte 9, il est proposé, ci-après, un second mode de réalisation susceptible de répondre de manière avantageuse au problème du collage de la pâte à ce plateau de façonnage 12.

Cette solution est illustrée dans la figure 4. Dans ce cas, une bande de toile 25 vient envelopper ce plateau de façonnage 12. Plus particulièrement, cette bande de toile 25 est enroulée longitudinalement autour ce dernier, en passant au-dessus de rouleaux de renvoi 26, 27 s'étendant le long des champs transversaux de ce plateau de façonnage 12. Cela permet de faire passer alternativement le brin supérieur 28 sec de la bande de toile 25 en dessous et vis-versa, permettant au brin inférieur 29, humidifié au contact de la pâte, de sécher et ainsi de suite.

De manière astucieuse, l'entrainement de cette bande de toile 25 pour faire alterner le brin supérieur 28 et le brin inférieur 29 peut se faire au travers de la bande de transport 3.

Plus particulièrement, cela consiste :
- au travers de la bande de transport 3, plus particulièrement de la gestion de son avance en aval de l'unité de découpe transversale 8, il est préservé, entre deux rangées transversales 10 successives de tronçons 9 de pâte une distance correspondant au moins à deux fois la largeur du plateau de façonnage 12, soit deux cycle de façonnage ;
- à amener cet espace libre sous ledit plateau de façonnage 12 ;
- puis à abaisser le plateau de façonnage 12 jusqu'à l'amener au contact de la bande de transport 3 ;
- à faire avancer cette bande de transport 3 en entrainant la bande de toile 25 pour faire passer le brin supérieur 28 de cette dernière sous ledit plateau de façonnage 12, tout en amenant le brin inférieur 29 au-dessus ;
- à surélever, à nouveau, le plateau de façonnage 12 en préparation du cycle de façonnage suivant.

Les avantages découlant d'une telle conception résident dans la simplification du dispositif de façonnage étant donné qu'aucun moyen moteur distinct n'est utile pour l'entrainement de la bande de toile 25.

Selon encore un autre mode de réalisation avantageux de la présente invention, le plateau de façonnage 12 peut se présenter sous forme d'un caisson dont les parois périphériques délimitent un volume interne 30 dans lequel peut être insufflé de l'air, notamment de l'air chaud. Celle-ci peut être diffusée au travers d'ouvertures ou perforations dans la face inférieure 24 et/ou la face supérieure 31 dudit plateau de façonnage 12.

Ainsi, l'air chaud diffusé, par exemple, au travers d'une tôle perforée constituant la face inférieure 24 du plateau de façonnage 12 permet d'éviter les phénomènes d'encrassement et de collage de la pâte sur cette face inférieure 24, voire sur le brin inférieur 29 de la bande de toile 25 au contact avec les tronçons de pâte 9.

En particulier, de l'air, notamment chauffé, traversant la face inférieure 24, voire la face supérieure 31 du plateau de façonnage 12, configurée en forme de caisson, favorise le séchage de la bande de toile 25.

Grâce à cette particularité de la présente invention, il est possible de travailler avec une pâte plus humide en comparaison aux unités de fabrication de produits de boulangerie, de type baguettes, pains longs, petits pains allongés mettant en œuvre des dispositifs de façonnage selon l'état de la technique.

A noter que la face inférieure 24 du plateau de façonnage 31 peut être plane ou structurée selon le résultat à obtenir après façonnage. En particulier, cette face inférieure 24 peut comporter une ou plusieurs rainures longitudinales, c'est-à-dire s'étendant transversalement par rapport à la bande de transport 3 et, donc, par rapport aux tronçons de bandelette de pâte 9. L'intérêt de cette ou ces rainures consiste à refermer, lors du façonnage, les extrémités des pâtons que définirons ces tronçons 9 de bandelette de pâte après façonnage pour la fabrication de baguettes, pains longs ou petits pains allongés. En particulier, le nombre de ces rainures correspond, préférentiellement, au nombre de rangées de ces tronçons 9 de bandelette de pâte qui sont façonnées simultanément lors d'un cycle exécuté par le plateau de façonnage 12.

La figure 9 illustre encore un autre mode de réalisation de l'invention où le plateau de façonnage 12 est constitué substantiellement par un tapis 32 s'étendant transversalement au-dessus de la bande de transport 3 et auquel il peut être transmis un déplacement alternatif en cours de façonnage. Plus particulièrement ce tapis peut décrire un circuit bouclé en venant s'enrouler partiellement autour de rouleaux de renvoi 33, 34 aux extrémités de ce plateau de façonnage. En tant que moyens d'entraînement 15, l'un au moins de ces rouleaux de renvoi 33, 34 peut être motorisé pour un entrainement alternatif dans un sens puis en sens inverse.

Tout comme pour les autres modes de réalisation décrits plus haut, un tel plateau de façonnage, ainsi conçu, est soumis à des moyens de commande de monté et descente 14, permettant, selon le cycle de façonnage tel qu'illustré dans les figures 5 à 8, de le déplacer verticalement.

Dans ce mode de réalisation on retrouve les avantages de celui correspondant à la figure 4. En effet, dans la mesure où l'amplitude du déplacement alternatif communiqué au tapis 32 est généralement très inférieure à la longueur du plateau de façonnage 12, entre deux cycles de façonnage et au travers, cette fois-ci, des moyens d'entraînement 15, le brin inférieur de ce tapis 32 humidifié par la pâte peut être alterné avec le brin supérieur. De même entre, ces brins inférieur et supérieur du tapis 32 peut-être insufflé de l'air, préférentiellement chauffé, pour favoriser ce séchage et/ou éviter l'encrassement du tapis par la pâte. D'ailleurs, là encore un caisson 35 aux parois supérieure 36 et/ou inférieure 37 perforées peut-être inséré entre les rouleaux de renvoi 33, 34 pour favoriser cette diffusion d'air, notamment chauffé, sous le tapis 32.

D'ailleurs, tout comme précédemment, la face inférieure d'un tel caisson 35 peut-être structurée, structure sous forme d'une ou plusieurs rainures pour conformer à souhait les tronçons de bandelette de pâte 9 par exemple en refermant leurs extrémités en cours de façonnage.

La présente invention constitue un progrès essentiel dans ces unités de fabrication de produits de boulangerie type baguettes, pains longs, petits pains allongés etc.

## Revendications

1. Procédé de façonnage de pâte pour la fabrication de baguettes, pains longs, petits pains allongés ou similaires consistant, partant d'une bande de pâte laminée (1) se déployant au-dessus d'une bande de transport (3):
- à découper dans le sens longitudinal cette bande de pâte laminée (1) en plusieurs bandelettes;
- à écarter transversalement ces bandelettes les unes par rapport aux autres;
- à découper les bandelettes à longueur au travers d'une découpe transversale pour la définition de tronçons (9) de bandelettes de pâte s'étendant longitudinalement au-dessus de ladite bande de transport (3), en rangées transversales (10, 10a, 10b), sensiblement perpendiculaire à l'axe longitudinale de cette bande de transport (3);
**caractérisé par le fait que**:
- on réalise le façonnage d'au moins une rangée transversale (10, 10a, 10b) de tronçons (9) de bandelettes de pâte longitudinale, sous l'impulsion d'un déplacement alternatif rectiligne transversal d'un plateau de façonnage (12) s'étendant perpendiculairement à ladite bande de transport (3), au-dessus de la ou des rangées (10, 10a, 10b) de tronçons (9) de bandelettes de pâte à façonner.

2. Procédé selon la revendication 1, **caractérisé en ce que**:
- on achemine la ou les rangées transversales (10, 10a, 10b) de tronçons (9) de bandelettes de pâte à façonner sous ledit plateau de façonnage (12) maintenus perpendiculairement au-dessus de la bande de transport (3) à une distance supérieure (13) à l'épaisseur desdits tronçons (9) de bandelettes de pâte;
- on abaisse le plateau de façonnage (12) sur la ou lesdites rangées (10, 10a, 10b);
- on soumet le plateau de façonnage (12) à un mouvement alternatif suivant une direction exclusivement perpendiculaire à la bande de transport (3) sur laquelle repose la ou lesdites rangées (10, 10a, 10b);
- on immobilise et on surélève ledit plateau de façonnage (12) au-delà d'une durée de façonnage et/ou d' un nombre déterminé de cycle de translations alternatives;
- on évacue la ou les rangées (10, 10a, 10b) de tronçons (9) de bandelettes de pâte façonnés.

3. Dispositif de façonnage de pâte pour la fabrication de baguettes, pains longs, petits pains allongés ou similaires consistant, partant d'une bande de pâte laminée (1) se déployant au-dessus d'une bande de transport (3), dans lequel la dispositif the façonnage comportant une bande de transport (3) à déplacement longitudinal sur laquelle sont susceptibles de reposer des rangées transversales (10, 10a, 10b) de tronçons (9) de bandelettes de pâte s'étendant longitudinalement, **caractérisé en ce qu'**il comporte:
- un plateau de façonnage (12) s'entendant perpendiculairement au-dessus de ladite bande de transport (3) ;
- des moyens (14) de commande de montée et descente du plateau de façonnage (12);
- et des moyens d' entraînement (15) pour soumettre ledit plateau de façonnage (12) à un mouvement de translation alternatif rectiligne transversalement au-dessus de ladite bande de transport (3).

4. Dispositif de façonnage selon la revendication 3, **caractérisé en ce que** la bande de transport (3) est définie de largeur supérieure à celle d' une rangée transversales (10, 10a, 10b) de tronçons (9) de bandelettes de pâte, ceci d'une longueur correspondant l'amplitude du déplacement transversal conférée auxdits tronçons (9) de bandelettes de pâte par le déplacement alternatif du plateau de façonnage (12) exclusivement perpendiculairement à la bande de transport (3).

5. Dispositif de façonnage selon la revendication 3 ou 4, **caractérisé en ce que** les moyens de commande de montée et de descente (14) sont constitués par des vérins (16) sur lesquels vient reposer le plateau de façonnage (12) par l'intermédiaire de galets (17).

6. Dispositif de façonnage selon l'une quelconque des revendications 3 à 5, **caractérisé en ce qu'**il comporte des moyens de guidage (18), préférentiellement sous forme de rouleaux ou galets (19), pour assurer le guidage transversal du plateau de façonnage (12), perpendiculairement au-dessus de la bande de transport (3).

7. Dispositif de façonnage selon l'une quelconque des revendications 3 à 6, **caractérisé en ce que** les moyens d' entraînement (15) comportent un moteur d'entraînement (20) soumettant en rotation, au moyen d'un plateau ou d'une bielle d'entraînement (21), une tige excentrique (22) engagée dans une fente longitudinale (23) ménagée dans le plateau de façonnage (12) pour, sous l'effet de la rotation de la tige excentrique (22), déplacer alternativement dans le sens transversal ledit plateau de façonnage (12).

8. Dispositif de façonnage selon l'une quelconque des revendications 3 à 7, **caractérisé en ce que** le plateau de façonnage (12) se présente sous forme d'un caisson dont les parois périphériques délimitent un volume interne (30) et comportant une face inférieure (24) et/ou une face supérieure (31) pourvues d'ouvertures ou perforations de diffusion d'air insufflé dans ledit caisson.

9. Dispositif de façonnage selon l'une quelconque des revendications 3 à 8, **caractérisé en ce que** le plateau de façonnage est enveloppé d'une bande de toile (25).

10. Dispositif de façonnage selon la revendication 9, **caractérisé en ce que** la bande de toile (25) est enroulée longitudinalement autour du plateau de façonnage (12), en passant au-dessus de rouleaux de renvoi (26, 27) s'étendant le long des champs transversaux de ce plateau de façonnage (12).

11. Dispositif de façonnage selon l'une quelconque des revendications 3 à 6, **caractérisé en ce que** le plateau de façonnage (12) est constitué substantiellement par un tapis (32) s'étendant transversalement au-dessus de la bande de transport (3) et auquel il est transmis un déplacement alternatif en cours de façonnage par les moyens d' entraînement (15).

12. Dispositif de façonnage selon la revendication 11, **caractérisé en ce que** le tapis (32) décrit un circuit bouclé en venant s'enrouler partiellement autour de rouleaux de renvoi (33, 34), dont au moins un est motorisé.

13. Dispositif de façonnage selon la revendication 11 ou 12, **caractérisé en ce qu'**un caisson (35) aux parois supérieure (36) et/ou inférieure (37) perforées est inséré entre rouleaux de renvoi (33, 34) du tapis pour diffuser de l'air, notamment chauffé sous ce dernier.

## Patentansprüche

1. Verfahren zum Formen von Teig für die Herstellung von Baguettes, Langbroten, länglichen Brötchen und dergleichen, das ausgehend von einem Band von ausgewalztem Teig (1), das über einem Förderband (3) abläuft, besteht aus:
- Zerschneiden in Längsrichtung dieses Bandes von ausgewalztem Teig (1) in mehrere Streifen;
- Trennen in Querrichtung dieser Streifen voneinander;
- Zuschneiden der Streifen über ein transversales Schneiden, um Teilstücke (9) von Teigstreifen zu definieren, die sich in Längsrichtung auf das Förderband (3) erstrecken, in Querreihen (10, 10a, 10b), die zur Längsachse dieses Förderbandes (3) im Wesentlichen rechtwinklig sind;
**dadurch gekennzeichnet, dass**:
- das Formen mindestens einer Querreihe (10, 10a, 10b) von Teilstücken (9) von Streifen von Längsteig unter dem Einfluss einer quergerichteten geradlinigen Hin- und Herbewegung einer Formungsplatte (12) erfolgt, die sich zu dem Förderband (3) über die Reihe(n) (10, 10a, 10b) von zu formenden Teilstücken (9) von Teigstreifen rechtwinklig erstreckt.

2. Verfahren nach Anspruch 1, **dadurch gekennzeichnet, dass**:
- die Querreihe(n) (10, 10a, 10b) von zu formenden Teilstücken (9) von Teigstreifen unter der Formungsplatte (12) befördert wird/werden, wobei sie über das Förderband (3) in einem Abstand (13), der größer als die Dicke der Teilstücke (9) von Teigstreifen ist, rechtwinklig gehalten wird/werden;
- die Formungsplatte (12) auf die Reihe(n) (10, 10a, 10b) abgesenkt wird;
- die Formungsplatte (12) einer Hin- und Herbewegung in einer Richtung ausgesetzt wird, die zu dem Förderband (3), auf dem die Reihe(n) (10, 10a, 10b) liegt/liegen, ausschließlich rechtwinklig ist;
- die Formungsplatte (12) nach einer Dauer des Formens und/oder einer bestimmten Anzahl von hin und her gehenden Translationszyklen angehalten und angehoben wird;
- die Reihe(n) (10, 10a, 10b) von geformten Teilstücken (9) von Teigstreifen abgeführt wird/werden.

3. Vorrichtung zum Formen von Teig für die Herstellung von Baguettes, Langbroten, länglichen Brötchen und dergleichen ausgehend von einem Band von ausgewalzten Teig (1), das über einem Förderband (3) erstreckt, wobei die Formvorrichtung ein sich längs bewegendes Förderband (3) umfasst, auf dem Querreihen (10, 10a, 10b) von Teilstücken (9) von Teigstreifen, die sich längs erstrecken, liegen können, **dadurch gekennzeichnet, dass** sie umfasst:
- eine Formungsplatte (12), die sich über das Förderband (3) rechtwinklig erstreckt;
- Mittel (14) zum Steuern der Auf- und Abwärtsbewegung der Formungsplatte (12);
- und Antriebsmittel (15), um die Formungsplatte (12) einer geradlinigen, hin und her gehenden Translationsbewegung in Querrichtung oberhalb des Förderbandes (3) zu unterziehen.

4. Formvorrichtung nach Anspruch 3, **dadurch gekennzeichnet, dass** das Förderband (3) mit einer Breite definiert ist, die größer als die einer Querreihe (10, 10a, 10b) von Teilstücken (9) von Teigstreifen ist, und zwar mit einer Länge, die der Amplitude der Querbewegung entspricht, die den Teilstücken (9) von Teigstreifen durch die Hin- und Herbewegung der Formungsplatte (12) ausschließlich rechtwinklig zum Förderband (3) verliehen wird.

5. Formvorrichtung nach Anspruch 3 oder 4, **dadurch gekennzeichnet, dass** die Mittel zum Steuern der Auf- und Abwärtsbewegung (14) aus Zylindern (16) bestehen, auf denen die Formungsplatte (12) anhand von Rollen (17) zu liegen kommt.

6. Formvorrichtung nach einem der Ansprüche 3 bis 5, **dadurch gekennzeichnet, dass** sie Führungsmittel (18) umfasst, bevorzugt in Form von Walzen oder Rollen (19), um die Querführung der Formungsplatte (12) rechtwinklig über das Förderband (3) sicherzustellen.

7. Formvorrichtung nach einem der Ansprüche 3 bis 6, **dadurch gekennzeichnet, dass** die Antriebsmittel (15) einen Antriebsmotor (20) umfassen, der mittels einer Platte oder einer Triebstange (21) einen exzentrischen Stab (22) in Drehung versetzt, der mit einem Längsschlitz (23) in Eingriff steht, der in der Formungsplatte (12) eingerichtet ist, um unter der Einwirkung der Drehung des exzentrischen Stabs (22) die Formungsplatte (12) in Querrichtung hin und her zu bewegen.

8. Formvorrichtung nach einem der Ansprüche 3 bis 7, **dadurch gekennzeichnet, dass** die Formungsplatte (12) in Form eines Kastens vorliegt, dessen Umfangswände ein Innenvolumen (30) begrenzen und eine Unterseite (24) und/oder eine Oberseite (31) umfassen, die mit Öffnungen oder Lochungen versehen sind, um in den Kasten eingeblasene Luft zu verbreiten.

9. Formungsplatte nach einem der Ansprüche 3 bis 8, **dadurch gekennzeichnet, dass** die Formungsplatte in ein Stoffband (25) eingewickelt ist.

10. Formvorrichtung nach Anspruch 9, **dadurch gekennzeichnet, dass** das Stoffband (25) in Längsrichtung um die Formungsplatte (12) herum gewickelt ist, wobei es über Umlenkwalzen (26, 27) geht, die sich entlang der Querfelder dieser Formungsplatte (12) erstrecken.

11. Formvorrichtung nach einem der Ansprüche 3 bis 6, **dadurch gekennzeichnet, dass** die Formungsplatte (12) im Wesentlichen aus einem Band (32) besteht, das sich in Querrichtung über das Förderband (3) erstreckt und auf die durch die Antriebsmittel (15) während des Formens eine Hin- und Herbewegung übertragen wird.

12. Formvorrichtung nach Anspruch 11, **dadurch gekennzeichnet, dass** das Band (32) einen geschlossenen Kreis beschreibt, der teilweise um Umlenkwalzen (33, 34) gewickelt ist, von denen mindestens eine motorisiert ist.

13. Formvorrichtung nach Anspruch 11 oder 12, **dadurch gekennzeichnet, dass** ein Kasten (35) mit oberen (36) und/oder unteren (37) perforierten Wänden zwischen den Umlenkwalzen (33, 34) des Bandes eingefügt ist, um insbesondere erhitzte Luft darunter zu verbreiten.

## Claims

1. Method of shaping dough for the manufacture of baguettes, long loaves, elongate rolls or the like, starting from a laminated strip (1) of dough extending on top of a conveyor belt (3):
- cutting up this laminated strip (1) of dough in the longitudinal direction into several strands;
- transversely spacing apart these strands from each other;
- cutting the strands to length through a transverse cut for the definition of sections (9) of strands of dough extending longitudinally on top of said conveyor belt (3), in transverse rows (10, 10a, 10b), substantially perpendicular to the longitudinal axis of this conveyor belt (3);
**characterised by** the fact that:
- the shaping of at least one transverse row (10, 10a, 10b) of sections (9) of longitudinal strands of dough is carried out, under the action of a transverse rectilinear alternating movement of a shaping plate (12) extending perpendicularly to said conveyor belt (3), above the row or rows (10, 10a, 10b) of sections (9) of strands of dough to be shaped.

2. Method according to claim 1, **characterised in that**:
- the transverse row or rows (10, 10a, 10b) of sections (9) of strands of dough to be shaped are conveyed under said shaping plate (12) held perpendicularly above the conveyor belt (3) at a distance (13) greater than the thickness of said sections (9) of strands of dough;
- the shaping plate (12) is lowered over said row or rows (10, 10a, 10b);
- the shaping plate (12) is subjected to alternating movement in a direction exclusively perpendicular to the conveyor belt (3) on which said row or rows (10, 10a, 10b) rest;
- said shaping plate (12) is immobilized and raised beyond a shaping duration and/or a determined number of alternating translation cycles;
- the row or rows (10, 10a, 10b) of shaped sections (9) of strands of dough are removed.

3. Shaping device for the manufacture of baguettes, long loaves, elongate rolls or the like, starting from a laminated strip (1) of dough extending on top of a conveyor belt (3), wherein the shaping device comprising a conveyor belt (3) having longitudinal movement on which can lie transverse rows (10, 10a, 10b) of sections (9) of strands of dough extending longitudinally, **characterised in that** it comprises:
- a shaping plate (12) extending perpendicularly above said conveyor belt (3);
- raising and lowering means (14) for the shaping plate (12) ;
- and driving means (15) for subjecting said shaping plate (12) to a rectilinear alternating translation movement transversely above said conveyor belt (3).

4. Shaping device according to claim 3, **characterised in that** the conveyor belt (3) is defined in width greater than that of a transverse row (10, 10a, 10b) of sections (9) of strands of dough, this being by a length corresponding to the amplitude of transverse movement imparted to said sections (9) of strands of dough by the alternating movement of the shaping plate (12) exclusively perpendicularly to the conveyor belt (3).

5. Shaping device according to claim 3 or 4, **characterised in that** the raising and lowering means (14) are constituted by cylinders (16) on which the shaping plate (12) is supported by means of rollers (17).

6. Shaping device according to any one of claims 3 to 5, **characterised in that** it comprises guide means (18), preferably in the form of rollers or drums (19), for providing transverse guiding of the shaping plate (12), perpendicularly above the conveyor belt (3).

7. Shaping device according to any one of claims 3 to 6, **characterised in that** the driving means (15) comprise a drive motor (20) causing to rotate, via a plate or connecting drive rod (21), an eccentric rod (22) engaged in a longitudinal slot (23) formed in the shaping plate (12) for, under the effect of the rotation of the eccentric rod (22), alternatingly moving said shaping plate (12) in the transverse direction.

8. Shaping device according to any one of claims 3 to 7, **characterised in that** the shaping plate (12) takes the form of a box of which the peripheral walls delimit an internal volume (30) and comprising a lower face (24) and/or an upper face (31) provided with openings or perforations for distribution of air blown into said box.

9. Shaping device according to any one of claims 3 to 8, **characterised in that** the shaping plate is enveloped with a fabric band (25).

10. Shaping device according to claim 9, **characterised in that** the fabric band (25) is wound longitudinally around the shaping plate (12), passing over return rollers (26, 27) extending along the transverse zones of that shaping plate (12).

11. Shaping device according to any one of claims 3 to 6, **characterised in that** the shaping plate (12) is substantially constituted by a belt (32) extending transversely above the conveyor belt (3) and to which is transmitted an alternating movement during shaping by the driving means (15).

12. Shaping device according to claim 11, **characterised in that** the belt (32) describes a closed loop by partially winding around return rollers (33, 34), of which at least one is motor-driven.

13. Shaping device according to claim 11 or 12, **characterised in that** a box (35) with perforated upper and/or lower walls (36, 37) is inserted between return rollers (33, 34) of the belt to distribute air, in particular heated air, under this latter.
